# FASCICULE DE BREVET EUROPEEN

(11) **EP 3 164 366 B1**
(45) Date de publication et mention de la délivrance du brevet: **04.03.2020**
(21) Numéro de dépôt: 15748280.3
(22) Date de dépôt: 02.07.2015
(51) Int. Cl.: C03C 17/00, C03C 17/32, C03C 17/34

(54) **RECIPIENT OU OBJET DE CONDITIONNEMENT CREUX EN VERRE A REVETMENT ANTI-BUEE EXTERNE**
HOHLGLASVERPACKUNGSGEGENSTAND ODER BEHÄLTER MIT EXTERNER BESCHLAGSCHUTZBESCHICHTUNG
HOLLOW GLASS PACKAGING OBJECT OR CONTAINER HAVING AN EXTERNAL ANTI-MIST COATING

(30) Priorité: 03.07.2014 FR 1456409
(43) Date de publication de la demande: 10.05.2017
(73) Titulaire: Verallia France, 92400 Courbevoie (FR)
(72) Inventeur: ARNAUD, Alix, 92120 Montrouge (FR); FOTI, Fabio, 60280 Margny-lès-Compiègne (FR); CHESTIER, Maxime, 93320 Les Pavillons sous Bois (FR)
(74) Mandataire: Agasse, Stéphane
(86) Numéro de dépôt international: PCT/FR2015/051841
(87) Numéro de publication internationale: WO 2016/001600

(56) Documents cités:
- EP-A1- 0 908 500
- EP-A1- 1 193 185
- WO-A2-2012/100024
- DE-A1-102006 004 913
- GB-A- 1 267 855
- JP-A- 2003 064 313

## Description

L'invention concerne les verres creux, tels que bouteilles, verres, etc. qui présentent la caractéristique nouvelle de comporter un revêtement anti-buée, à savoir un revêtement hydrophile.

Les bouteilles, verres, et, en général, les récipients et objets de conditionnement creux en verre, qui sont placés avec leur contenu dans une chambre refroidie telle qu'un réfrigérateur, ont tendance à s'embuer, ce qui entraîne l'inconvénient de ne plus voir leur contenu.

La Société déposante a recherché une solution à ce problème, cette solution l'ayant simultanément conduit à utiliser une telle formation de buée pour obtenir, avec une préparation particulière du récipient ou de l'objet de conditionnement creux, un effet décoratif.

A cet effet, la Société déposante a découvert que l'on pouvait revêtir la paroi extérieure du verre creux par un revêtement hydrophile anti-condensation de l'eau (formation de buée), et que, si l'on appliquait ce revêtement sur une partie seulement de la paroi extérieure du verre creux en formant un motif en positif ou négatif, celui-ci apparaîtrait en sortie de la chambre refroidie (congélateur (T < -10°C) ou réfrigérateur (T < + 10°C)) par contraste entre les zones embuées et celles sans buée restant transparentes.

Par ailleurs, la demande DE 10 2006 004913 A1 divulgue des verres creux caractérisés par le fait qu'ils consistent en un substrat verrier, notamment sodocalcique, présentant sur au moins une partie de leur paroi extérieure un revêtement organique à base d'alcool polyvinylique (PVA) réticulé avec un diacide organique et ayant optionnellement, un agent antimousse, l'épaisseur du revêtement étant de 1 micron à 100 microns. Les documents GB1267855 A, EP0908500 A1, EP1193185 A1, WO2012100024 A2 décrivent des revêtements hydrophiles pour le verre.

La présente invention a donc d'abord pour objet un récipient ou objet de conditionnement creux en verre, tel que bouteille, verre, flacon, pot, qui est défini selon l'une quelconque des revendications 1 à 5.

Le revêtement organique hydrophile est à base d'au moins un polyuréthane (PU) et d'au moins un polymère hygroscopique qui est une polyvinylpyrrolidone.

Le polyuréthane peut être obtenu à partir d'au moins un diisocyanate aliphatique, de façon particulièrement préférée, à partir de l'hexaméthylène-1,6-diisocyanate, d'un oligomère d'hexaméthylène-1,6-diisocyanate ou d'un homopolymère d'hexaméthylène-1,6-diisocyanate.

Le polyuréthane est en outre obtenu de préférence au moins avec un polyalkylène glycol, de façon particulièrement préférée le polyéthylène glycol. La masse moléculaire moyenne du polyéthylène glycol est de préférence de 180 g/mole à 630 g/mole, de façon particulièrement préférée de 190 g/mole à 320 g/mole.

Le polyuréthane peut également être obtenu au moins avec un polyéther polyol, de façon particulièrement préférée le polypropylène éther polyol, de façon tout particulièrement préférée le polypropylène éther polyol trifonctionnel. La masse moléculaire moyenne du polypropylène éther polyol est, de préférence, de 200 g/mole à 600 g/mole, de façon particulièrement préférée, de 350 g/mole à 500 g/mole. Le polyuréthane peut notamment être obtenu au moins avec un mélange de polypropylène éther glycol et de polyéthylène glycol, par exemple avec un rapport massique du polypropylène éther glycol au polyéthylène glycol de 2:1 à 1:2.

Le polyuréthane peut aussi être obtenu au moins avec du 1,4-butanediol ou avec du polyéthylène glycol et du 1,4-butanediol. Le rapport massique du polyéthylène glycol au 1,4-butanediol est de préférence de 1:2 à 2:1.

Le polyuréthane peut également être obtenu au moins avec du polyéthylène glycol, du polypropylène éther glycol et/ou du 1,4-butanediol.

Le polyuréthane a notamment une structure poreuse. Ainsi, la matrice polyuréthane peut absorber l'humidité, en particulier avec l'utilisation d'un composant polyol hydrophile, tel que le polyéthylène glycol.

Le polymère hygroscopique est une polyvinylpyrrolidone ayant une masse moléculaire moyenne en poids de 0,8 x 10⁵ g/mole à 2,2 x 10⁶ g/mole, de façon préférée, 1,1 x 10⁵ g/mole à 1,8 x 10⁵ g/mole. Sa masse moléculaire moyenne en nombre peut être de 200 x 10³ g/mole à 400 x 10³ g/mole, de façon particulièrement préférée, de 250 x 10³ g/mole à 375 x 10³ g/mole.

La polyvinylpyrrolidone est un polymère hygroscopique qui peut absorber jusqu'à 40% de sa propre masse d'eau. La polyvinylpyrrolidone est de préférence noyée dans la matrice polyuréthane. La polyvinylpyrrolidone peut être liée de façon covalente ou par adsorption au polyuréthane.

L'avantage provient notamment de la polyvinylpyrrolidone hygroscopique intégrée dans la matrice polyurétane. Ainsi, le revêtement peut absorber une grande quantité d'humidité par comparaison avec du polyuréthane pur. De plus, l'humidité peut être absorbée plus rapidement. La condensation de gouttelettes d'eau sur le substrat verrier aux basses températures et la congélation de l'humidité sur le substrat verrier peut donc être empêchée pendant une période de temps plus longue que par une couche sans polyvinylpyrrolidone.

Le rapport en masse PU/polymère(s) hygroscopique(s) est de 1/1000 à 1/1.

Le revêtement organique hydrophile à base de PU/polymère(s) hygroscopique(s) peut contenir en outre au moins un agent d'écoulement choisi parmi les poly(organo)siloxanes, notamment les polydiméthylsiloxanes, en particulier les polydiméthylsiloxanes modifiés par polyester, tels que les polydiméthylsiloxanes à fonctionnalité hydroxy, modifiés par polyester ; les polyacrylates ; et le dioxyde de silicium, en particulier le dioxyde de silicium sous forme de nanoparticules ; à raison notamment de 0,1 à 3 parties en masse pour 100 parties en masse de PU + polymère(s) hygroscopique(s).

Des agents d'écoulement appropriés poly(organo)siloxanes sont, par exemple, le BYK®-306 et le BYK®-315. Un polydiméthylsiloxane à fonctionnalité hydroxyle, modifié par polyester, est, par exemple, le BYK®-370. Des agents d'écoulement polyacrylates sont notamment les BYK®-356, BYK®-361N et BYK®-381. Des nanoparticules de dioxyde de silicium sont, par exemple, celles commercialisées sous la marque NANOBYK®-3650.

Le substrat verrier peut être choisi parmi le verre, le verre de quartz, le verre borosilicaté, le verre sodocalcique et les verres organiques tels que le poly(méthacrylate de méthyle)(PMMA) et le polycarbonate (PC) .

Le revêtement organique hydrophile est lié au substrat verrier par l'intermédiaire d'une couche de promoteur d'adhésion, lequel est choisi notamment parmi les silanes, les silanes dans lesquels l'atome de silicium est substitué par au moins une chaîne alkyle pouvant contenir au moins un groupe fonctionnel tel qu'hydroxyle, carboxyle ou amino, et/ou par au moins un groupe hydroxyle, alcoxy ou halogénure, en particulier un silane à fonctionnalité amino, tel que le (3-aminopropyl)silanetriol ; les organophosphonates, les acides organophosphoniques, les organotitanates, les organozirconates et/ou les organozircoaluminates.

Le revêtement organique hydrophile peut avantageusement avoir une épaisseur de couche de 0,1 µm à 250 µm, de préférence de 1 µm à 100 µm, de façon particulièrement préférée de 3 µm à 50 µm, la couche éventuelle de promoteur d'adhésion ayant une épaisseur de 2 à 100 µm.

Dans le cas où le revêtement organique hydrophile ne revêt qu'une partie de la paroi extérieure du substrat verrier, on peut prévoir que ledit revêtement organique hydrophile a été appliqué sur ladite paroi de façon à former un motif négatif ou positif.

La présente invention a également pour objet un procédé de fabrication d'un verre creux tel que défini ci-dessus, caractérisé par le fait qu'il comporte les étapes suivantes :
(a) une solution contenant les ingrédients de formation du revêtement organique hydrophile et au moins un solvant est appliquée sur le substrat verrier par pulvérisation, trempage ou, lorsque le revêtement organique hydrophile est un revêtement partiel, par pulvérisation sur la paroi extérieure du substrat verrier sur laquelle un masque a été appliqué, ou par sérigraphie ;
(b) le substrat verrier revêtu de ladite solution est séché ; et
(c) le durcissement dudit substrat est réalisé par voie thermique ou par irradiation UV ou par faisceau d'électrons,
une couche de promoteur d'adhésion pouvant être appliquée sur le substrat verrier avant l'étape (a) en particulier par immersion dudit substrat verrier dans une solution dudit promoteur d'adhésion puis séchage ou par flammage silicaté.

Dans le cas où le revêtement organique hydrophile est à base de PU + polymère(s) hygroscopique(s), de préférence à l'étape (a), on prépare une solution contenant le ou les composés isocyanate et polyol destinés à former le ou les polyuréthanes par polyaddition, le cas échéant au moins un catalyseur de formation du ou des polyuréthanes, le ou les polymères hygroscopiques, le cas échéant le ou les agents d'écoulement, et au moins un solvant choisi notamment parmi la diacétone-alcool, le tert-butanol, les cétones et les solvants non polaires tels que le xylène ; à l'étape (b), on sèche le substrat verrier pour éliminer le solvant notamment à une température de 30 à 70°C, de préférence de 45°C à 55°C ; et à l'étape (c), on porte à la température à 100-150°C, de préférence de 115°C-130°C, en particulier pendant une période de 20 min à 60 min, notamment de 30 min à 50 min.

Le composé isocyanate a au moins deux groupes isocyanate. Les groupes isocyanate peuvent être libres ou bloqués par des groupes chimiques protecteurs.

Le composé isocyanate peut être aliphatique, cycloaliphatique, aromatique ou hétérocylique. Dans un mode de réalisation préféré, le composé isocyanate comprend un diisocyanate aliphatique, de façon particulièrement préférée l'hexaméthylène-1,6-diisocyanate.

Le composé isocyanate peut être utilisé sous sa forme monomère. En variante, des oligomères ou des homopolymères basés sur le monomère isocyanate peuvent être utilisés. Même des copolymères de différents composés isocyanates ou d'un composé isocyanate et, par exemple, d'un polyol peuvent être utilisés.

Le composé isocyanate peut également avoir au moins trois groupes isocyanate.

Le polyol a au moins deux groupes hydroxyle.

Le polyol peut être linéaire, ramifié ou cyclique. Le polyol peut, par exemple, comprendre un polyéther polyol, un polyester polyol, un polyacrylate hydroxylé ou un polycarbonate hydroxylé. Des copolymères ou combinaisons de différents polyols peuvent également être utilisés.

Le polyol peut comprendre au moins un polyalkylène glycol, par exemple, le polypropylène glycol, de façon particulièrement préférée, le polyéthylène glycol, lequel est hygroscopique. La masse moléculaire moyenne du polyéthylène glycol est de préférence de 180 g/mole à 630 g/mole, de façon particulièrement préférée de 190 g/mole à 320 g/mole.

Le polyol peut également comprendre au moins un polyalkylène éther polyol, de préférence le polypropylène éther polyol, de façon particulièrement préférée un polypropylène éther polyol trifonctionnel. La masse moléculaire moyenne du polypropylène éther polyol est de préférence de 200 g/mole à 600 g/mole, de façon particulièrement préférée, de 350 g/mole à 500 g/mole. Le polyol peut comprendre au moins un mélange de polypropylène éther glycol et de polyéthylène glycol, par exemple avec un rapport massique du polypropylène éther glycol au polyéthylène glycol de 2:1 à 1:2.

Le polyol peut aussi comprendre au moins du 1,4-butanediol. Dans un mode de réalisation préféré, le polyol comprend au moins un polyalkylène glycol (de préférence le polyéthylène glycol) et du 1,4-butanediol. Le rapport massique du polyalkylène glycol au 1,4-butanediol est de 1:2 à 2:1.

Le polyol peut également comprendre au moins du 1,4-butanediol et du polypropylène éther glycol ou au moins du 1,4-butanediol, du polyéthylène glycol et du polypropylène éther glycol. Le polyol peut contenir au moins du polyéthylène glycol, du polypropylène éther glycol et/ou du 1,4-butanediol.

Le composé isocyanate peut ainsi contenir au moins de l'hexaméthylène-1,6-diisocyanate, un oligomère d'hexaméthylène-1,6-diisocyanate ou un homopolymère d'hexaméthylène-1,6-diisocyanate ; le composé polyol peut contenir au moins du polyéthylène glycol, du polypropylène éther glycol et/ou du 1,4-butanediol ; et la solution peut contenir un catalyseur, de préférence le dilaurate de dibutylétain.

En particulier, la solution peut contenir de 0,001 % en poids à 0,1 % en poids du catalyseur. Le catalyseur augmente la vitesse de réaction du polyol et du composé isocyanate. De préférence, des composés organométalliques du bismuth ou de l'étain, tels qu'un carboxylate d'étain ou un carboxylate de bismuth, de façon particulièrement préférée, le dilaurate de dibutylétain, sont utilisés comme catalyseurs. Des amines, par exemple, la triéthylènediamine, ou des azines, par exemple, le 1,4-diaza(2,2,2)bicyclooctane, peuvent également être utilisées comme catalyseurs.

La présente invention concerne également l'utilisation d'un verre creux tel que défini ci-dessus pour faire apparaître un motif lorsque l'on sort ledit verre creux d'une zone de stockage froide.

L'Exemple suivant illustre la présente invention sans toutefois en limiter la portée. Dans cet Exemple, les abréviations suivantes ont été utilisées :
DAA : diacétone alcool
DBTL : dilaurate de dibutylétain
PEG : polyéthylène glycol
PVP : polyvinylpyrrolidone

On a préparé la formulation suivante pour une couche anti-buée organique :

| Ingrédient | Parties en poids |
|---|---|
| Isocyanate commercialisé par la Société «Bayer» sous la marque «DESMODUR N3200» | 20, 440 |
| PEG | 11,185 |
| PVP | 3,579 |
| DBTL | 0,099 |
| Polydiméthylsiloxane commercialisé par la Société «BYK» sous la marque «BYK®-370» | 0,138 |
| DAA | 64, 649 |

On a appliqué sur des bouteilles de type Ovation (verre clair transparent) et Champenoise (verre vert) des films adhésifs décollables découpés pour former deux types de motif : négatif et positif.

On a pulvérisé sur ces bouteilles une solution de silane à fonctionnalité amino, puis on a trempé les bouteilles dans la solution anti-buée préalablement préparée.

On a séché les bouteilles à 50°C pendant 15 min (phase de séchage avec évaporation du solvant), puis on a chauffé les bouteilles à 120°C pendant 40 min (réticulation de l'isocyanate avec le polyol en présence du catalyseur). On a laissé refroidir jusqu'à la température ambiante puis on a retiré les films de masquage pour dénuder les parties non revêtues.

On a ensuite placé les bouteilles au réfrigérateur à 0°C pendant 1h. On a retiré les bouteilles une fois refroidies. Apparaissait alors le motif décoratif recherché par la formation de buée uniquement sur les parties non revêtues des bouteilles, par contraste avec les zones revêtues transparentes.

## Revendications

1. Récipient ou objet de conditionnement creux en verre, tel que bouteille, verre, flacon, pot, dont le substrat verrier dudit récipient ou objet de conditionnement présente sur au moins une partie de sa paroi extérieure un revêtement organique hydrophile anti-condensation de l'eau appliqué de façon à former un motif négatif ou positif, **caractérisé par le fait que** :
- le revêtement organique hydrophile est à base d'au moins un polyuréthane (PU) et d'au moins un polymère hygroscopique qui est une polyvinylpyrrolidone ayant une masse moléculaire moyenne en poids de 0,8 x 10⁵ g/mole à 2,2 x 10⁶ g/mole, de façon préférée de 1,1 x 10⁵ g/mole à 1,8 x 10⁵ g/mole,
- le rapport en masse PU/polymère (s) hygroscopique (s) est de 1/1000 à 1/1.

2. Récipient ou objet de conditionnement selon la revendication 1, **caractérisé par le fait que** le revêtement organique hydrophile contient en outre au moins un agent d'écoulement choisi notamment parmi les poly(organo)siloxanes, notamment les polydiméthylsiloxanes, en particulier les polydiméthylsiloxanes modifiés par polyester, tels que les polydiméthylsiloxanes à fonctionnalité hydroxy, modifiés par polyester ; les polyacrylates ; et le dioxyde de silicium, en particulier le dioxyde de silicium sous forme de nanoparticules ; à raison notamment de 0,1 à 3 parties en masse pour 100 parties en masse de PU + polymère (s) hygroscopique(s) .

3. Récipient ou objet de conditionnement selon l'une des revendications 1 à 2, **caractérisé par le fait que** le substrat verrier est choisi parmi le verre, le verre de quartz, le verre borosilicaté, le verre sodocalcique et les verres organiques tels que le poly(méthacrylate de méthyle) (PMMA) et le polycarbonate (PC) .

4. Récipient ou objet de conditionnement selon l'une des revendications 1 à 3, **caractérisé par le fait que** le revêtement organique hydrophile est lié au substrat verrier par l'intermédiaire d'une couche de promoteur d'adhésion, lequel est choisi notamment parmi les silanes, les silanes dans lesquels l'atome de silicium est substitué par au moins une chaîne alkyle pouvant contenir au moins un groupe fonctionnel tel qu'hydroxyle, carboxyle ou amino, et/ou par au moins un groupe hydroxyle, alcoxy ou halogénure, en particulier un silane à fonctionnalité amino, tel que le (3-aminopropyl)silanetriol ; les organophosphonates, les acides organophosphoniques, les organotitanates, les organozirconates et/ou les organozircoaluminates.

5. Récipient ou objet de conditionnement selon l'une des revendications 1 à 4, **caractérisé par le fait que** le revêtement organique hydrophile a une épaisseur de couche de 0,1 µm à 250 µm, de préférence de 1 µm à 100 µm, de façon particulièrement préférée de 3 µm à 50 µm, la couche éventuelle de promoteur d'adhésion ayant une épaisseur de 2 à 100 µm.

6. Procédé de fabrication d'un récipient ou objet de conditionnement tel que défini à l'une des revendications 1 à 5, **caractérisé par le fait qu'**il comporte les étapes suivantes :
(a) une solution contenant les ingrédients de formation du revêtement organique hydrophile et au moins un solvant est appliquée sur le substrat verrier par pulvérisation, trempage ou, lorsque le revêtement organique hydrophile est un revêtement partiel, par pulvérisation sur la paroi extérieure du substrat verrier sur laquelle un masque a été appliqué, ou par sérigraphie ;
(b) le substrat verrier revêtu de ladite solution est séché ; et
(c) le durcissement dudit substrat est réalisé par voie thermique ou par irradiation UV ou par faisceau d'électrons,
une couche de promoteur d'adhésion pouvant être appliquée sur le substrat verrier avant l'étape (a) en particulier par immersion dudit substrat verrier dans une solution dudit promoteur d'adhésion puis séchage ou par flammage silicaté.

7. Procédé selon la revendication 6 pour la formation d'un substrat verrier tel que défini à l'une des revendications 1 à 5, **caractérisé par le fait qu'**à l'étape (a), on prépare une solution contenant le ou les composés isocyanate et polyol destinés à former le ou les polyuréthanes par polyaddition, le cas échéant au moins un catalyseur de formation du ou des polyuréthanes, le ou les polymères hygroscopiques, le cas échéant le ou les agents d'écoulement, et au moins un solvant choisi notamment parmi la diacétone-alcool, le tert.-butanol, les cétones et les solvants non polaires tels que le xylène ; à l'étape (b), on sèche le substrat verrier pour éliminer le solvant notamment à une température de 30 à 70°C, de préférence de 45°C à 55°C ; et à l'étape (c), on porte à la température à 100-150°C, de préférence de 115°C-130°C.

8. Procédé selon la revendication 7, **caractérisé par le fait que** le composé isocyanate contient au moins de l'hexaméthylène-1,6-diisocyanate, un oligomère d'hexaméthylène-1,6-diisocyanate ou un homopolymère d'hexaméthylène-1,6-diisocyanate ; le composé polyol contient au moins du polyéthylène glycol, du polypropylène éther glycol et/ou du 1,4-butanediol ; et la solution contient un catalyseur, de préférence le dilaurate de dibutylétain.

9. Utilisation d'un récipient ou objet de conditionnement tel que défini à la revendication 1 pour faire apparaître le motif lorsque l'on sort ledit verre creux d'une zone de stockage froide.

## Patentansprüche

1. Hohlglasverpackungsgegenstand oder -behälter wie z. B. Flasche, Glas, Fläschchen, Topf, wobei das Glassubstrat des Verpackungsgegenstands oder -behälters auf mindestens einem Teil seiner äußeren Wand eine hydrophile organische, die Kondensierung des aufgebrachten Wassers verhindernde Beschichtung aufweist, um ein negatives oder positives Muster zu bilden, **dadurch gekennzeichnet, dass**:
- die hydrophile organische Beschichtung auf mindestens einem Polyurethan (PU) und mindestens einem hygroskopischen Polymer basiert, wobei es sich um ein Polyvinylpyrrolidon mit einer mittleren Molekularmasse in Gewicht von 0,8 x 10⁵ g/mol bis 2,2 x 10⁶ g/mol, vorzugsweise von 1,1 x 10⁵ g/mol bis 1,8 x 10⁵ g/mol handelt,
- das Massenverhältnis PU/hygroskopische(s) Polymer(e) von 1/1000 bis 1/1 ist.

2. Hohlglasverpackungsgegenstand oder -behälter nach Anspruch 1, **dadurch gekennzeichnet, dass** die hydrophile organische Beschichtung außerdem mindestens ein Fließmittel enthält, insbesondere ausgewählt aus den Poly(organo)siloxanen, insbesondere den Polydimethylsiloxanen, besonders den durch Polyester modifizierten Polydimethylsiloxanen wie den Polydimethylsiloxanen mit Hydroxyfunktion, modifiziert durch Polyester; Polyacrylaten; und Siliciumdioxid, besonders Siliciumdioxid in Form von Nanopartikeln; im Umfang insbesondere von 0,1 bis 3 Massenteilen für 100 Massenteile PU + hygroskopische(s) Polymer(e).

3. Hohlglasverpackungsgegenstand oder -behälter nach einem der Ansprüche 1 bis 2, **dadurch gekennzeichnet, dass** das Glassubstrat ausgewählt ist aus Glas, Quarzglas, Borosilikatglas, Kalk-Natron-Glas und organischen Gläsern wie Polymethylmethacrylat (PMMA) und Polycarbonat (PC).

4. Hohlglasverpackungsgegenstand oder -behälter nach einem der Ansprüche 1 bis 3, **dadurch gekennzeichnet, dass** die hydrophile organische Beschichtung mit dem Glassubstrat über eine Schicht Haftvermittler verbunden ist, der insbesondere ausgewählt ist aus Silanen, Silanen, in denen das Siliciumatom durch mindestens eine Alkylkette substituiert ist, die mindestens eine funktionelle Gruppe wie Hydroxyl, Carboxyl oder Amino enthalten kann, und/oder durch mindestens eine Hydroxyl-, Alcoxy- oder Halogenidkette, besonders ein Silan mit Aminofunktion, wie (3-Aminopropyl)silantriol; Organophosphonate, Organophosphonsäuren, Organotitanate, Organozirkonate und/oder Organozirkoaluminate.

5. Hohlglasverpackungsgegenstand oder -behälter nach einem der Ansprüche 1 bis 4, **dadurch gekennzeichnet, dass** die hydrophile organische Beschichtung eine Schichtdicke von 0,1 µm bis 250 µm, vorzugsweise von 1 µm bis 100 µm, auf besonders bevorzugte Weise von 3 µm bis 50 µm hat, wobei die eventuelle Schicht von Haftvermittler eine Dicke von 2 bis 100 µm aufweist.

6. Verfahren zur Herstellung eines Verpackungsgegenstands oder - behälters wie in einem der Ansprüche 1 bis 5 definiert, **dadurch gekennzeichnet, dass** es die folgenden Schritte umfasst:
(a) Aufbringen eine Lösung, enthaltend die Bestandteile zur Bildung der hydrophilen organischen Beschichtung und mindestens ein Lösemittel, auf das Glassubstrat durch Zerstäubung, Einweichen oder, wenn die hydrophile organische Beschichtung eine teilweise Beschichtung ist, durch Zerstäuben auf die äußere Wand des Glassubstrats, auf der eine Maske aufgebracht wurde, oder durch Siebdruck;
(b) Trocknen des mit der Lösung beschichteten Glassubstrat; und
(c) Durchführen des Aushärtens des Substrats auf thermischem Weg oder durch UV- oder Elektronenbündelbestrahlung,
wobei eine Schicht Haftvermittler auf das Glassubstrat vor Schritt (a) aufgebracht werden kann, besonders durch Eintauchen des Glassubstrats in eine Lösung des Haftvermittlers, dann Trocknen oder durch Silikat-Beflammen.

7. Verfahren nach Anspruch 6 zum Bilden eines Glassubstrats wie in einem der Ansprüche 1 bis 5 definiert, **dadurch gekennzeichnet, dass** in Schritt (a) eine Lösung hergestellt wird, die die Verbindung(en) Isocyanat und Polyol enthält, die ausgelegt sind, um das oder die Polyurethane durch Polyaddition zu bilden, gegebenenfalls mindestens einen Katalysator zur Bildung des oder der Polyurethane, des oder der hygroskopischen Polymere, gegebenenfalls des oder der Fließmittel und mindestens eines Lösemittels, insbesondere ausgewählt aus Diacetonalkohol, tert.-Butanol, nicht polaren Cetonen und Lösemitteln wie Xylen; in Schritt (b) das Glassubstrat getrocknet wird, um das Lösemittel zu beseitigen, insbesondere bei einer Temperatur von 30 bis 70 °C, vorzugsweise von 45 bis 55 °C; und in Schritt (c) die Temperatur auf 100-150 °C angehoben wird, vorzugsweise von 115 °C-130 °C.

8. Verfahren nach Anspruch 7, **dadurch gekennzeichnet, dass** die Isocyanatverbindung mindestens Hexamethylen-1,6-diisocyanat, ein Oligomer von Hexamethylen-1,6-Diisocyanat oder ein Homopolymer von Hexamethylen-1,6-Diisocyanat enthält; die Polyolverbindung mindestens ein Polyethylenglycol, Polypropylenetherglycol und/oder 1,4-Butandiol enthält; und die Lösung einen Katalysator, vorzugsweise Dibutylzinndilaurat enthält.

9. Verwendung eines Verpackungsgegenstands oder -behälters wie in Anspruch 1 definiert, um das Muster erscheinen zu lassen, wenn das hohle Glas aus einem kalten Lagerbereich herausgenommen wird.

## Claims

1. A hollow glass packaging container or object, such as a bottle, glass, flask, pot, whose glass substrate of said packaging container or object has, on at least one portion of its outer wall, an anti-water condensation hydrophilic organic coating applied so as to form a negative or positive pattern, **characterized by** the fact that:
- the hydrophilic organic coating is based on at least one polyurethane (PU) and at least one hygroscopic polymer which is a polyvinylpyrrolidone having a weight-average molecular mass of 0.8 x 10⁵ g/mole to 2.2 x 10⁶ g/mole, preferably from 1.1 x 10⁵ g/mole to 1.8 x 10⁵ g/mole,
- the PU/hygroscopic polymer(s) mass ratio is of 1/1000 to 1/1.

2. The packaging container or object according to claim 1, **characterized by** the fact that the hydrophilic organic coating further contains at least one flow agent selected in particular from poly(organo)siloxanes, in particular polydimethylsiloxanes, particularly polyester-modified polydimethylsiloxanes, such as polyester-modified hydroxy-functional polydimethylsiloxanes; polyacrylates; and silicon dioxide, particularly silicon dioxide in the form of nanoparticles; in particular at a rate of 0.1 to 3 parts by mass per 100 parts by mass of PU + hygroscopic polymer(s).

3. The packaging container or object according to any of claims 1 to 2, **characterized by** the fact that the glass substrate is selected from glass, quartz glass, borosilicate glass, soda-lime glass and organic glasses such as poly(methyl methacrylate) (PMMA) and polycarbonate (PC).

4. The packaging container or object according to any of claims 1 to 3, **characterized by** the fact that the hydrophilic organic coating is bonded to the glass substrate by means of an adhesion promoter layer, which is selected in particular from silanes, silanes in which the silicon atom is substituted by at least one alkyl chain that may contain at least one functional group such as hydroxyl, carboxyl or amino group, and/or by at least one hydroxyl, alkoxy or halide group, particularly an amino-functional silane, such as (3-aminopropyl)silanetriol; organophosphonates, organophosphonic acids, organotitanates, organozirconates and/or organozircoaluminates.

5. The packaging container or object according to any of claims 1 to 4, **characterized by** the fact that the hydrophilic organic coating has a layer thickness of from 0.1 to 250 µm, preferably from 1 µm to 100 µm, in a particularly preferred manner from 3 µm to 50 µm, the optional adhesion promoter layer having a thickness of from 2 to 100 µm.

6. A method for manufacturing a packaging container or object as defined in any of claims 1 to 5, **characterized by** the fact that it includes the following steps:
(a) a solution containing the ingredients for forming the hydrophilic organic coating and at least one solvent is applied to the glass substrate by spraying, dip-coating or, when the hydrophilic organic coating is a partial coating, by spraying onto the outer wall of the glass substrate onto which a mask has been applied, or by screen printing;
(b) the glass substrate coated with said solution is dried; and
(c) the curing of said substrate is performed thermally or by UV radiation or by electron beam,
an adhesion promoter layer can be applied to the glass substrate before step (a) particularly by immersing said glass substrate in a solution of said adhesion promoter then drying or by silicate flaming.

7. The method according to claim 6 for forming a glass substrate as defined in any of claims 1 to 5, **characterized by** the fact that in step (a), a solution is prepared containing the isocyanate and polyol compound(s) intended to form the polyurethane(s) by polyaddition, where appropriate at least one catalyst for forming the polyurethane(s), the hygroscopic polymer(s), where appropriate the flow agent(s), and at least one solvent selected in particular from diacetone alcohol, tert-butanol, ketones and non-polar solvents such as xylene; in step (b), the glass substrate is dried in order to eliminate the solvent in particular at a temperature of 30 to 70 °C, preferably from 45 °C to 55 °C; and in step (c), the temperature is brought to 100-150 °C, preferably from 115 °C-130 °C.

8. The method according to claim 7 **characterized by** the fact that the isocyanate compound contains at least 1,6-hexamethylene diisocyanate, an oligomer of 1,6-hexamethylene diisocyanate or a homopolymer of 1,6-hexamethylene diisocyanate; the polyol compound contains at least polyethylene glycol, polypropylene ether glycol and/or 1,4-butanediol; and the solution contains a catalyst, preferably dibutyltin dilaurate.

9. A use of a packaging container or object as defined in claim 1 to reveal the pattern when said hollow glass is removed from a cold storage area.
